# EUROPEAN PATENT SPECIFICATION

(11) **EP 3 207 116 B1**
(45) Date of publication and mention of the grant of the patent: **25.12.2019**
(21) Application number: 15828857.1
(22) Date of filing: 05.10.2015
(51) Int. Cl.: C12J 1/02, C12J 1/08

(54) **PROCESS FOR THE PRODUCTION OF A FOOD SEASONING**
VERFAHREN ZUR HERSTELLUNG EINER LEBENSMITTELWÜRZE
PROCÉDÉ DE PRODUCTION D'UN ASSAISONNEMENT ALIMENTAIRE

(30) Priority: 13.10.2014 IT MO20140287
(43) Date of publication of application: 23.08.2017
(73) Proprietor: Acetaia Giuseppe Cremonini S.r.l., 41057 Spilamberto (MO) (IT)
(72) Inventor: FERRARI, Alberto, I-41057 Spilamberto (MO) (IT)
(74) Representative: Brunacci, Marco
(86) International application number: PCT/IB2015/057602
(87) International publication number: WO 2016/059509

(56) References cited:
- WO-A1-2013/050828
- WO-A1-2014/033761
- CN-A- 1 483 803
- DATABASE GNPD [Online] MINTEL; 1 August 2006 (2006-08-01), N.N.: "Red wine and balsamic vinegars", XP002741733, Database accession no. 566890
- N N: "Red wine and balsamic vinegars", GNPD; MINTEL, August 2006 (2006-08), XP002741733, [retrieved on 2006-08-01]

## Description

### Technical Field

The present invention relates to a process for the production of a food seasoning.

### Background Art

The need is particularly felt in many areas of industrial and craft activities, to renew one's products and find new ones in order to better distinguish the same from those of the competition.

This need is especially felt in the food industry for the preparation and distribution of seasonings intended for seasoning food for human consumption.

To meet the above requirement, various oil and/or vinegar based seasonings are known combined with different substances having properties that on the one hand can be flavoring and taste enhancing and on the other hand nutrient and healthful for humans.

In this regard it is underlined that, in addition to the need of offering seasonings with a different taste than those of the competition, in this sector the search for seasonings having a great flavoring power is becoming more and more important which, at the same time, are able to provide a relevant well-being to the user, e.g. because they are able to integrate substances with a balanced nutritional provision and, more generally, beneficial effects on the human body. Those requirements, however, often remain unfulfilled.

The products currently on the market, in actual fact, almost never succeed in combining the fact of being seasonings with a good taste and providing well-being and, when they have beneficial properties for humans, they usually have an unpleasant taste and flavor.

It must be emphasized that most of the seasonings currently on the market that are stated to provide beneficial effects to the users, are actually only able to provide the human organism with substances which, although beneficial, have no curative or therapeutic properties.

In some cases, moreover, these products have a high content of sucrose and fat and are not recommended for a balanced diet.

A further limitation of the seasonings currently on the market is that they are not always edible by people affected by celiac disease.

Special types of foods and beverages are disclosed in the patent documents WO 2013/050828, WO 2014/033761 and in the non-patent literature DATABASE GNPD [Online] MINTEL; N.N.: "Red wine and balsamic vinegars", accession no. 566890.

### Description of the Invention

An object of the present invention is to provide a process for the production of a food seasoning that, in a practical, easy and functional manner, allows to obtain a seasoning having the aforementioned qualities.

Another object of the present invention is to provide a relative production process which overcome the above mentioned drawbacks of the prior art within the ambit of a simple, rational, easy, effective to use and affordable solution.

The objects stated above are achieved by the present process for the production of a food seasoning having the characteristics of claim 1.

### Brief Description of the Drawings

Other characteristics and advantages of the present invention will become better evident from the description of a preferred, but not exclusive, embodiment of a process for the production of a food seasoning, illustrated by way of an indicative, but non-limiting, example in the accompanying drawings, wherein:

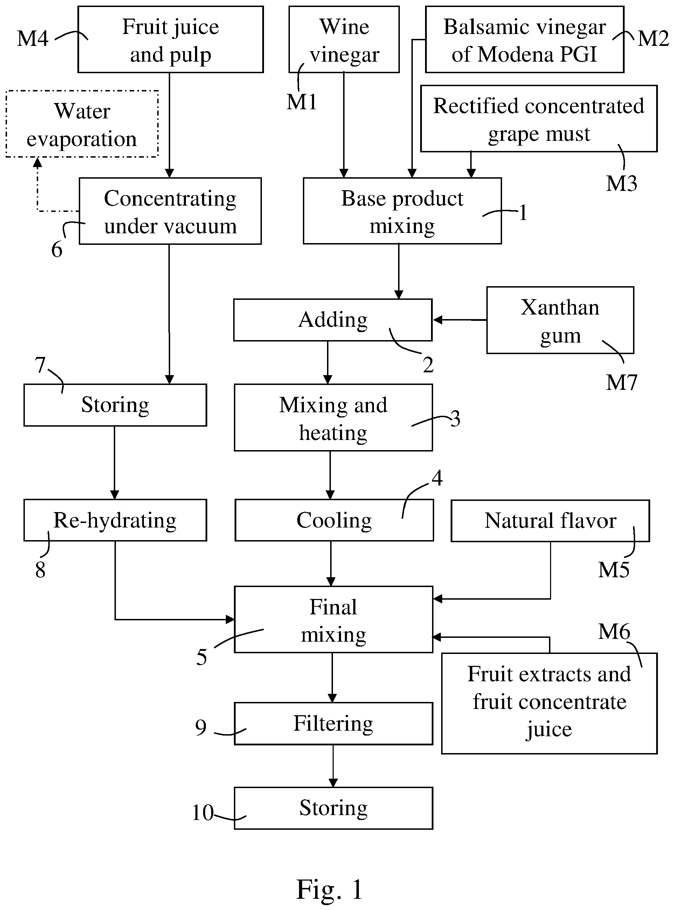

Figure 1 is a block diagram that illustrates the process according to the invention.

### Embodiments of the Invention

The process shown in Figure 1 is intended for the production of a food seasoning which comprises a mixture of at least the following main components:
- at least one of wine vinegar M1 and balsamic vinegar M2;
- rectified concentrated grape must M3;
- fruit juice and pulp M4; and
- at least a thickener and stabilizer substance M7.

Conveniently, the balsamic vinegar M2 is the type of balsamic vinegar of Modena PGI, as defined under Regulation EC 583/2009 of 3 July 2009.

In general, the term "vinegar" is used to refer to products obtained from acetic bioxidation of ethyl alcohol.

An extensive bibliography is available on the therapeutic properties of vinegar, giving the same a range of medicinal properties: antibacterial, antioxidant, hypotensive, hypoglycemic, anti-cancer, preventive against osteoporosis, etc.

Similar functions are attributable to the extracts of wine origin obtained from skins and pulp of the grapes from which vinegars derive, generally defined as phenolic compounds.

The benefits of phenolic compounds on human health have been widely demonstrated in literature for their antioxidant and anti-free radicals properties, among which are included the protective effect on brain degenerative processes, the anti-inflammatory effect, the anti-carcinogenic action, and antiatherogenic and cardioprotective action.

The rectified concentrated grape must M3, on the contrary, is the result of the concentration of grape must which is filtered and stabilized by means of the passage through ion exchange columns which remove impurities and leave only the sugars naturally present in the grapes.

The use of rectified concentrated grape must M3 is motivated by the fact that the must contains two main sugars, namely glucose and fructose in a ratio of about 50%.

The natural presence of such a high percentage of fructose is very important because approximately 1.5 times sweeter than sucrose and 3 times sweeter than glucose.

For this reason, its use allows to obtain a sweeter product with a lower sugar content and consequently with a lower calorie content.

In addition to this, fructose has a palatable taste reminiscent of ripe fruit and has no negative effects for diabetics.

The fruit juice and pulp M4 are the result of fruit squeezing, wherein the juice forms the liquid part and the pulp forms the more or less soft "fleshy" part.

The presence of fruit juice and pulp M4 makes the seasoning according to the invention naturally sweet and aromatic.

Furthermore, fruit also brings considerable quantities of organic acids (e.g. citric acid, tartaric acid and malic acid) the therapeutic properties of which are well known.

The thickener and stabilizer substance M7 is, e.g., xanthan gum that is a polysaccharide used as a thickener and is the result of glucose and sucrose fermentation by bacteria from the Xanthomonas strain.

The use of the thickener and stabilizer substance M7 aims at making the product as thick and viscous as starch, but suitable for consumption by people affected by celiac disease.

Preferably, but not exclusively, the mixture may also comprise other components such as, e.g., at least one natural flavor M5 and at least one acidity regulator M6.

The addition of natural flavors M5 aims at making the drink tastier and more palatable and, at the same time, enriching it with substances useful for health, such as vitamins and antioxidant phenolic compounds.

The acidity regulator M6 is a substance that modifies the seasoning pH and, preferably, consists of fruit extracts and fruit concentrate juice of the selected type as appropriate, depending on the type of fruit juice and pulp M4 employed. By way of example, if the fruit juice and pulp M4 are fig juice and pulp, which is a fruit characterized by a rather low pH level, then the acidity regulator M6 may usefully consist of lemon concentrated juice and extracts, which on the contrary is a fruit with a rather high pH level.

At the same time, if fruit juice and pulp M4 are raspberry juice and pulp, which is a fruit with a rather high pH level, then the acidity regulator M6 may consist e.g. of apple concentrated juice and extracts, which on the contrary is a fruit with a rather low pH level.

The mixture obtained from the union of the above mentioned components comprises at least one of wine vinegar M1 and balsamic vinegar M2, rectified concentrated grape must M3, fruit juice and pulp M4, at least a natural flavor M5, at least an acidity regulator M6 and at least a thickener and stabilizer substance M7, in the following concentrations of weight with respect to the total weight of the mixture:

| | |
|---|---|
| - at least one of wine vinegar M1 and balsamic vinegar M2 | 20-50% |
| - rectified concentrated grape must M3 | 10-30% |
| - fruit juice and pulp M4 | 32-50% |
| - at least an acidity regulator M6 | 0-10% |
| - at least a natural flavor M5 | 0-5% |
| - at least a thickener and stabilizer substance M7 | 0.5 - 5% |

The process employed to produce such seasoning comprises mixing 1, 5 together, also in separate steps and at different times, the above mentioned main components, namely:
- at least one of wine vinegar M1 and balsamic vinegar M2;
- rectified concentrated grape must M3;
- fruit juice and pulp M4; and
- at least a thickener and stabilizer substance M7.

In particular, the mixing 1, 5 comprises a first mixing step 1 wherein are mixed at least one of wine vinegar M1 and balsamic vinegar M2 together with rectified concentrated grape must M3, to obtain a base product M1, M2, M3.

Preferably, in this first mixing step 1 are added both wine vinegar M1 and balsamic vinegar M2.

The process then provides a step of adding 2 wherein to the base product M1, M2, M3 obtained from the previous step is added the thickener and stabilizer substance M7.

The base product M1, M2, M3, added with the thickener and stabilizer substance M7, then undergoes to a step of mixing and heating 3 which takes place at a temperature between 45°C and 80°C.

Such step aims, on the one hand, at separating any bacteria present in the base product M1, M2, M3 and, on the other hand, to dissolve and activate due to the effect of temperature the thickener and stabilizer substance M7, which as said is e.g. xanthan gum.

Preferably, the heating takes place at a temperature between 53°C and 57°C and, in more detail, equal to 55°C.

After the step of mixing and heating 3 a step of cooling 4 takes place wherein the base product M1, M2, M3, which is heated and added with the thickener and stabilizer substance M7, returns to room temperature.

Cooling 4 can equally take place naturally or in a forced manner.

Once cooled down, the base product M1, M2, M3, cooled and added with the thickener and stabilizer substance M7, undergoes to a second mixing step 5 with fruit juice and pulp M4.

During the second mixing step 5, together with the base product M1, M2, M3, the thickener and stabilizer substance M7 and the fruit juice and pulp M4, are also mixed the acidity regulator M6 and the natural flavor M5.

The fruit juice and pulp M4, which as said is obtained by squeezing fruit, can be added to the mixture immediately after being squeezed or after a certain storage time.

In order to obtain an industrial production of the seasoning which is stable and durable, the fruit juice and pulp M4 is preferably stored.

In this regard, the process according to the invention provides that, before the second mixing step 5, the following steps are carried out:
- concentrating 6 the squeezed fruit juice and pulp M4. This step takes place under vacuum by heating the squeezed fruit juice and pulp M4 at a temperature between 40°C and 50°C. This step allows to make the water evaporate within the fruit juice and pulp M4. The fact of carrying out this job under vacuum allows to obtain evaporation of water without reaching very high temperatures which would distort the fruit juice and pulp M4 and will ruin the qualities thereof;
- storing 7 the concentrated fruit juice and pulp M4. During storage, therefore, the fruit juice and pulp M4 is in the state of concentrate, i.e. in a condition, completely or almost completely, devoid of water. This avoids the fermentation of fruit juice and pulp M4 and significantly lengthens the preservation time of same before use;
- re-hydrating 8 the stored fruit juice and pulp M4, roughly reintegrating the same amount of water previously evaporated. By so doing the natural state of the original raw material is restored. The second mixing step 5 takes place using the re-hydrated fruit juice and pulp M4.

The mixture obtained at the end of the second mixing step 5 can finally undergo to a filtration step 9 and a storage step 10, before its final placing on the market.

### EXAMPLE 1

A food seasoning has been produced comprising a mixture of at least one of wine vinegar M1 and balsamic vinegar M2, rectified concentrated grape must M3, fruit juice and pulp M4, at least a natural flavor M5, at least an acidity regulator M6 (which in this case consists of fruit extracts and fruit concentrate juice) and at least a thickener and stabilizer substance M7 (which in this case consists of xanthan gum), in the following concentrations of weight evaluated with respect to the total weight of the mixture:

| | |
|---|---|
| - at least one of wine vinegar M1 and balsamic vinegar M2 | 36% |
| - rectified concentrated grape must M3 | 16% |
| - fruit juice and pulp M4 | 42% |
| - at least a natural flavor M5 | 1% |
| - at least an acidity regulator M6 | 4% |
| - at least a thickener and stabilizer substance M7 | 1% |

Such seasoning is produced by a process which comprises the steps of:
- obtaining the fruit juice and pulp M4 by fruit squeezing;
- concentrating 6 the fruit juice and pulp M4 by heating under vacuum the fruit juice and pulp M4 at a temperature between 40°C and 50°C;
- storing 7 the concentrated fruit juice and pulp M4;
- re-hydrating 8 the stored fruit juice and pulp M4, roughly reintegrating the same amount of water previously evaporated;
- mixing, in a first mixing step 1, the wine vinegar M1, balsamic vinegar M2 and rectified concentrated grape must M3, to obtain a base product M1, M2, M3;
- adding 2 the xanthan gum M7 to the base product M1, M2, M3;
- mixing and heating 3 at 55°C the base product M1, M2, M3 and xanthan gum M7;
- cooling 4 down to room temperature, under natural cooling, the heated base product M1, M2, M3 and xanthan gum M7;
- mixing, in a second mixing step 5, the base product M1, M2, M3 and xanthan gum M7 with the natural flavor M5, with the fruit extracts and fruit concentrate juice M6 and with the fruit juice and pulp M4 obtained from the re-hydrating step 8;
- filtering 9 the seasoning thus obtained;
- storing 10 the seasoning prior to its final placing on the market.

## Claims

1. Process for the production of a food seasoning, comprising mixing (1, 5) together, also in separate steps and at different times, at least the following components:
- at least one of wine vinegar (M1) and balsamic vinegar (M2);
- rectified concentrated grape must (M3);
- fruit juice and pulp (M4); and
- at least a thickener and stabilizer substance (M7);
wherein said mixing (1, 5) comprises a first mixing step (1) of said at least one of said wine vinegar (M1) and balsamic vinegar (M2) and said rectified concentrated grape must (M3), to obtain a base product (M1, M2, M3);
wherein said process comprises a step of adding (2) said thickener and stabilizer substance (M7) to said base product (M1, M2, M3);
wherein said process comprises a step of mixing and heating (3) of said base product (M1, M2, M3) added with said thickener and stabilizer substance (M7), said mixing and heating (3) taking place at a temperature between 45°C and 80°C;
wherein said process comprises a step of cooling (4) of said heated base product (M1, M2, M3) added with said thickener and stabilizer substance (M7); and wherein said fruit juice and pulp (M4) is obtained by fruit squeezing; **characterized in that** said mixing (1, 5) comprises a second mixing step (5) of said cooled base product (M1, M2, M3) added with said thickener and stabilizer substance (M7) with said fruit juice and pulp (M4), and **in that**, before said second mixing step (5), said process comprises the following steps:
- concentrating (6) said squeezed fruit juice and pulp (M4), wherein said concentrating (6) takes place under vacuum by heating said squeezed fruit juice and pulp (M4) at a temperature between 40°C and 50°C;
- storing (7) said concentrated fruit juice and pulp (M4);
- re-hydrating (8) said stored fruit juice and pulp (M4);
said second mixing step (5) taking place with said rehydrated fruit juice and pulp (M4).

2. Process according to claim 1, **characterized in that** said mixing and heating (3) takes place at a temperature between 53°C and 57°C.

3. Process according to one or more of preceding claims, **characterized in that** said second mixing step (5) comprises mixing also at least one between:
- at least one acidity regulator (M6); and
- at least one natural flavor (M5).

## Patentansprüche

1. Verfahren zur Herstellung eines Gewürzes für Lebensmittel, umfassend das Mischen (1, 5) mindestens der folgenden Komponenten, auch in getrennten Schritten und zu unterschiedlichen Zeiten:
- mindestens eines von Weinessig (M1) und Balsamico-Essig (M2);
- rektifizierter konzentrierter Traubenmost (M3);
- Fruchtsaft und Fruchtfleisch (M4); und
- mindestens eine Verdickungs- und Stabilisatorsubstanz (M7);
wobei das Mischen (1, 5) einen ersten Mischschritt (1) des mindestens einen von Weinessig (M1) und Balsamico-Essig (M2) und dem rektifizierten konzentrierten Traubenmost (M3) umfasst, um ein Basisprodukt (M1, M2, M3) zu erhalten;
wobei das Verfahren einen Schritt der Zugabe (2) der Verdickungs- und Stabilisatorsubstanz (M7) zu dem Basisprodukt (M1, M2, M3) umfasst;
wobei das Verfahren einen Schritt des Mischens und Erwärmens (3) des Basisprodukts (M1, M2, M3) umfasst, dem die Verdickungs- und Stabilisatorsubstanz (M7) zugegeben wurde, wobei das Mischen und Erwärmen (3) bei einer Temperatur zwischen 45°C und 80°C stattfindet;
wobei das Verfahren einen Schritt des Kühlens (4) des erwärmten Basisprodukts (M1, M2, M3) umfasst, dem die Verdickungs- und Stabilisatorsubstanz (M7) zugegeben wurde; und
wobei der Fruchtsaft und das Fruchtfleisch (M4) durch Pressen von Früchten erhalten wird;
**dadurch gekennzeichnet, dass** das Mischen (1, 5) einen zweiten Mischschritt (5) des gekühlten Basisprodukts (M1, M2, M3) umfasst, dem die Verdickungs- und Stabilisatorsubstanz (M7) mit dem Fruchtsaft und Fruchtfleisch (M4) zugegeben wurden, und dass das Verfahren vor dem zweiten Mischschritt (5) die folgenden Schritte umfasst:
- Konzentrieren (6) des gepressten Fruchtsaftes und Fruchtfleischs (M4), wobei das Konzentrieren (6) unter Vakuum durch Erwärmen des gepressten Fruchtsaftes und Fruchtfleischs (M4) auf eine Temperatur zwischen 40°C und 50°C erfolgt;
- Speichern (7) des konzentrierten Fruchtsaftes und Fruchtfleischs (M4);
- Rehydrieren (8) des gespeicherten Fruchtsafts und Fruchtfleischs (M4);
wobei der zweite Mischschritt (5) mit dem rehydrierten Fruchtsaft und Fruchtfleisch (M4) stattfindet.

2. Verfahren nach Anspruch 1, **dadurch gekennzeichnet, dass** das Mischen und Erwärmen (3) bei einer Temperatur zwischen 53°C und 57°C erfolgt.

3. Verfahren nach einem oder mehreren der vorhergehenden Ansprüche, **dadurch gekennzeichnet, dass** der zweite Mischschritt (5) das Mischen auch mindestens eines umfasst von:
- mindestens einem Säureregler (M6); und
- mindestens einem natürlichem Aroma (M5).

## Revendications

1. Procédé de production d'un assaisonnement alimentaire, comprenant le mélange (1, 5), ensemble, aussi à des étapes distinctes et à des moments différents, d'au moins les composants suivants :
- au moins l'un de vinaigre de vin (M1) et de vinaigre balsamique (M2) ;
- du moût de raisin concentré rectifié (M3) ;
- du jus et de la pulpe de fruits (M4) ; et
- au moins un agent épaississant et stabilisant (M7) ;
dans lequel ledit mélange (1, 5) comprend une première étape de mélange (1) desdits au moins l'un desdits vinaigre de vin (M1) et vinaigre balsamique (M2) et dudit moût de raisin concentré rectifié (M3) pour obtenir un produit de base (M1, M2, M3) ;
dans lequel ledit procédé comprend une étape d'ajout (2) dudit agent épaississant et stabilisant (M7) audit produit de base (M1, M2, M3) ;
dans lequel ledit procédé comprend une étape de mélange et de chauffage (3) dudit produit de base (M1, M2, M3) auquel est ajouté ledit agent épaississant et stabilisant (M7), lesdits mélange et chauffage (3) ayant lieu à une température comprise entre 45 °C et 80 °C ;
dans lequel ledit procédé comprend une étape de refroidissement (4) dudit produit de base chaud (M1, M2, M3) auquel est ajouté ledit agent épaississant et stabilisant (M7) ; et dans lequel lesdits jus et pulpe de fruits (M4) sont obtenus par pressage de fruits ; **caractérisé en ce que** ledit mélange (1, 5) comprend une seconde étape de mélange (5) dudit produit de base refroidi (M1, M2, M3) auquel est ajouté ledit agent épaississant et stabilisant (M7) avec lesdits jus et pulpe de fruits (M4), et **en ce que**, avant ladite seconde étape de mélange (5), ledit procédé comprend les étapes suivantes :
- concentration (6) desdits jus et pulpe de fruits (M4) pressés, dans lequel ladite concentration (6) a lieu sous vide par chauffage desdits jus et pulpe de fruits (M4) pressés à une température comprise entre 40 °C et 50 °C ;
- stockage (7) desdits jus et pulpe de fruits (M4) concentrés ;
- réhydratation (8) desdits jus et pulpe de fruits (M4) stockés ;
ladite seconde étape de mélange (5) ayant lieu avec lesdits jus et pulpe de fruits réhydratés (M4).

2. Procédé selon la revendication 1, **caractérisé en ce que** lesdits mélange et chauffage (3) ont lieu à une température comprise entre 53 °C et 57 °C.

3. Procédé selon une ou plus des revendications précédentes, **caractérisé en ce que** ladite seconde étape de mélange (5) comprend le mélange d'également au moins l'un de :
- au moins un régulateur d'acidité (M6) ; et
- au moins un arôme naturel (M5).
